# EUROPEAN PATENT APPLICATION

(11) **EP 4 187 648 A1**
(43) Date of publication of application: **31.05.2023**
(21) Application number: 22814274.1
(22) Date of filing: 08.07.2022
(51) Int. Cl.: H01M 4/58, C01B 25/45, H01M 10/0525

(54) **PREPARATION METHOD FOR HIGH-RATE LITHIUM IRON PHOSPHATE POSITIVE ELECTRODE MATERIAL**

(30) Priority: 09.10.2021 CN 202111175470
(71) Applicant: HUBEI WANRUN NEW ENERGY TECHNOLOGY CO., LTD., Shiyan, Hubei 442500 (CN)
(72) Inventor: YANG, Jiaojiao, Shiyan, Hubei 442500 (CN); WANG, Qin, Shiyan, Hubei 442500 (CN); CHENG, Guozhang, Shiyan, Hubei 442500 (CN); GAO, Chuan, Shiyan, Hubei 442500 (CN); ZHAO, Xu, Shiyan, Hubei 442500 (CN); YU, Suixi, Shiyan, Hubei 442500 (CN)
(74) Representative: von Tietzen und Hennig, Nikolaus
(86) International application number: PCT/CN2022/104544
(87) International publication number: WO 2023/056767

(57) **Abstract**

A high-rate lithium iron phosphate positive electrode material and a production method thereof, comprising first, weighing an iron source and a lithium source in a molar ratio of 1:1-1:1.05, then weighing 5-15% of carbon source and 0-1% of metal ion doping agent based on the total mass of the iron source and lithium source, adding water to the above weighed materials, ball milling and sand grinding the obtained slurry, so that the D50 after the sand grinding is controlled to be 100-200 nm, then spraying the mixture to obtain a precursor, putting the precursor into a sintering furnace for sintering at 650-700 °C under the protection of nitrogen gas, cooling to obtain a sintered material, then pulverizing the sintered material, sieving the pulverized material and removing iron to obtain the lithium iron phosphate. The prepared lithium iron phosphate has a good rate capability and a good cycle stability, wherein 0.1 C discharge capacity thereof reaches 160mAh/g, and 10 C discharge capacity thereof reaches 140mAh/g. The microscopic morphology of the positive electrode material is a spherical-like particle, wherein the primary particle thereof has a mean value of 100 nm.

## Description

### CROSS REFERENCE TO RELATED APPLICATIONS

This application claims the priority of Chinese Patent Application No. 202111175470.8, filed with the China National Intellectual Property Administration on October 9, 2021, and titled with "PREPARATION METHOD OF HIGH-RATE LITHIUM IRON PHOSPHATE POSITIVE ELECTRODE MATERIAL", which is hereby incorporated by reference.

### FIELD

The present disclosure belongs to the field of lithium batteries, and relates to the production of positive electrode materials for lithium ion batteries, in particular to a method for producing high-rate lithium iron phosphate positive electrode material.

### BACKGROUND

Although the traditional lead-acid battery has mature technology and low cost, it has low mass and volume energy density, short cycle life, and a risk of lead pollution in the industrial chain. Polyanion lithium iron phosphate represented by lithium iron phosphate as the positive electrode material for lithium ion battery has received extensive attention due to its advantages of high theoretical capacity, good thermal stability, good cycle capability, stable structure, environmental friendliness, etc., especially in the field of power batteries and start-stop power supplies. As the technology of lithium iron phosphate becomes increasingly mature, the application of lithium iron phosphate to replace lead-acid batteries in the field of start-stop power supply is becoming increasingly extensive.

At present, the synthesis methods for producing lithium iron phosphate positive electrode materials are mainly divided into the following five categories, namely high-temperature solid-phase method, carbothermic reduction method, microwave synthesis method, sol-gel method and hydrothermal/solvothermal method. The hydrothermal/solvothermal method and high-temperature solid-phase method are currently the main methods used to synthesize lithium iron phosphate. The lithium iron phosphate material produced by the hydrothermal/solvothermal method has the advantages of complete crystalline structure, no impurity peak, uniform particle size, even carbon coating on the particle surface, etc. However, the hydrothermal/solvothermal method has complicated production process, high consumption of lithium source, high cost, and a low reaction temperature in the production of lithium iron phosphate, which easily causes antisite defects in the material lattice.

The high-temperature solid-phase method comprises fully grinding a lithium source, an iron source, a phosphorus source, and a carbon source with pure water according to a certain ratio, subjecting the mixture to high temperature spray pyrolysis to obtain a pale yellow precursor powder, and reacting the obtained powder at a high temperature under a protective atmosphere for a period of time to obtain well-crystallized lithium iron phosphate. The method has the advantages of low cost, simple process route, good product stability, even carbon coating, and easy large-scale industrial production, but has the disadvantages of large primary particle, uneven particle size, long diffusion distance of lithium ion, and low diffusion coefficient, which seriously restrict its application in high-power start-stop power supplies. Therefore, researching and solving the above problems is the direction of further research on the high-temperature solid-phase method.

### SUMMARY

Mainly to solve the above problem of easily causing large primary particles and uneven particles in the production of lithium iron phosphate positive electrode material by high-temperature solid-phase method, the present disclosure provides a novel high-rate lithium iron phosphate positive electrode material and a production method thereof.

The present disclosure is realized through the following solution:
The above-mentioned high-rate lithium iron phosphate material has a spherical-like morphology, and the primary particle thereof has a particle size of 100 nm;
In the above-mentioned high-rate lithium iron phosphate positive electrode material, the used anhydrous iron phosphate has a honeycomb structure, and a BET of 9-11 m²/g;
In the above-mentioned high-rate lithium iron phosphate positive electrode material, the precursor powder and the lithium source are fully mixed in a molar ratio of the iron source to the lithium source of 1:1-1:1.05, and the mass of the carbon source accounts for 5-15% of the total mass of the iron source and lithium source. In the method for producing a lithium iron phosphate positive electrode material, the carbon source is selected from the group consisting of glucose, PEG2000, PEG6000, white granulated sugar, citric acid and a combination thereof;
In the method for producing a lithium iron phosphate positive electrode material, the final particle size D50 of the slurry after sand grinding is controlled to be 100-200 nm.

In the method for producing a lithium iron phosphate positive electrode material, the precursor is sintered at a high temperature of 650-700 °C under the protection of a nitrogen atmosphere. In the following preferred embodiments of the present disclosure, the conditions such as the excess coefficient of the lithium source, the type of the carbon source, the particle size D50 after the sand grinding, and the temperature of the high-temperature sintering are specifically defined.

The method for producing a lithium iron phosphate positive electrode material comprises specific steps of:
first, weighing a certain amount of iron phosphate and lithium carbonate in a molar ratio of 1:1 to 1:1.05, mixing the iron phosphate and lithium carbonate with 10% of a carbon source compound based on the total mass of the phosphorus source and lithium source material to prepare a slurry with a solid content of 40%;
adding the above slurry into a ball mill for 2 h of ball milling to mix the slurry evenly;
transferring the slurry after the ball milling into a sand grinder for fine grinding, so that the final particle size D50 after sand grinding is controlled to be 100-200nm;
spray-drying the slurry after sand grinding with an air inlet temperature of 240-280 °C and an air outlet temperature of 80-95 °C to obtain a pale yellow precursor powder;
placing the precursor powder in a graphite saggar for sintering at a high temperature of 650-700 °C under the protection of nitrogen atmosphere for 18-20h, and then cooling the sintered material naturally;
pulverizing the sintered material by a jet mill, so that the particle size D50 of the pulverized material is controlled to be 0.4-1.5 µm, then sieving the pulverized material, and removing iron by electric current to obtain a high-rate lithium iron phosphate positive electrode material.

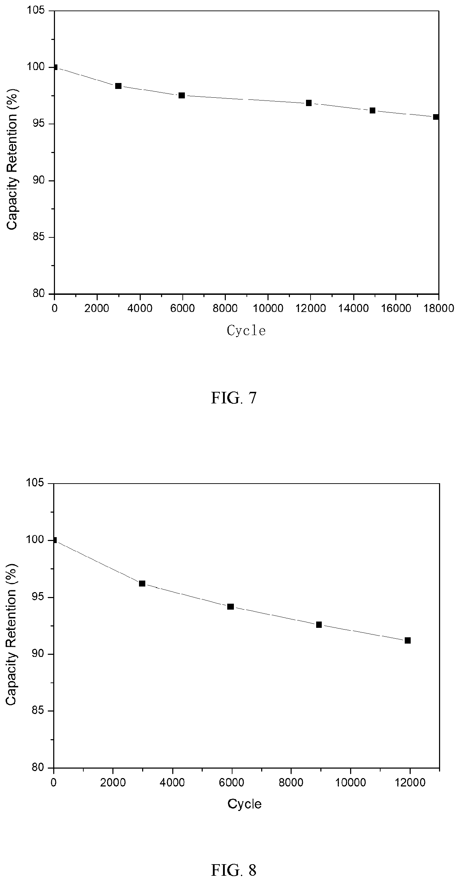

The present disclosure has the following beneficial effects:
Firstly, the lithium iron phosphate precursor with spherical-like morphology was prepared by high-temperature solid-phase method, wherein the primary particle thereof had a particle size of 100 nm. The prepared lithium iron phosphate material was characterized, wherein the XRD spectrum showed characteristic peaks of lithium iron phosphate with no impurity peak. The prepared material was used to assemble a CR2032 button half-cell. The CR2032 button half-cell was subjected to a test for electrical properties, wherein the prepared spherical-like lithium iron phosphate positive electrode material had an initial discharge specific capacity of 161 mAh/g at room temperature and a current of 0.1 C, an initial discharge specific capacity of 140 mAh/g at room temperature and a current of 10 C, and a capacity retention rate of above 95% after 17,878 operating mode cycles at 25 °C. FIG. 8 shows that Example 1 had a capacity retention rate of above 90% after 11,922 operating mode cycles at 45 °C, showing good rate capability and good cycle stability.

The material prepared by the present disclosure has a complete crystalline structure, no impurity peak, good discharge capacity and good cycle capability

### BRIEF DESCRIPTION OF DRAWINGS

FIG. 1 is an XRD pattern of the lithium iron phosphate positive electrode material in Example 1 of the present disclosure;
FIG. 2 is an SEM image of the lithium iron phosphate positive electrode material in Example 1 of the present disclosure;
FIG. 3 is a curve of the initial charge-discharge at 0.1C of the lithium iron phosphate positive electrode material in Example 1 of the present disclosure;
FIG. 4 is curves of the particle size distribution of the lithium iron phosphate positive electrode material in Example 1 of the present disclosure after charging at 0.5C, discharging at 0.5C, charging at 0.5C, discharging at 1C and charging at 0.5C, discharging at 0.5C and charging at 2C, discharging at 0.5C and charging at 5C, and discharging at 10C;
FIG. 5 is curves of the particle size distribution of the lithium iron phosphate positive electrode material in Example 2 of the present disclosure after charging at 0.5C, discharging at 0.5C, charging at 0.5C, discharging at 1C and charging at 0.5C, discharging at 0.5C and charging at 2C, discharging at 0.5C and charging at 5C, and discharging at 10C;
FIG. 6 is curves of the particle size distribution of the lithium iron phosphate positive electrode material in Example 3 of the present disclosure after charging at 0.5C, discharging at 0.5C, charging at 0.5C, discharging at 1C and charging at 0.5C, discharging at 0.5C and charging at 2C, discharging at 0.5C and charging at 5C, and discharging at 10C;
FIG. 7 is a curve of operating mode cycles of the lithium iron phosphate positive electrode material in Example 1 of the present disclosure at 25 °C;
FIG. 8 is a curve of operating mode cycles of the lithium iron phosphate positive electrode material in Example 1 of the present disclosure at 45 °C.

### DETAILED DESCRIPTION

The technical solutions of the present disclosure will be clearly and completely described below in conjunction with the examples of the present disclosure. It is apparent that the described examples are only a part of the embodiments of the present disclosure, rather than all the embodiments. Based on the examples of the present disclosure, all the other examples obtained by those of ordinary skill in the art without any creative work shall fall into the scope of the present disclosure.

The high-rate lithium iron phosphate positive electrode material of the present disclosure has spherical-like morphology, and the primary particle thereof has a particle size of 100 nm. The specific production method comprises:
first, weighing an iron phosphate material and a lithium carbonate material in a molar ratio of 1:1-1:1.05, then weighing 5-15% of carbon source and 0-1% of metal ion doping agent based on the total mass of the iron source and lithium source, and adding pure water to the above weighed materials to prepare a slurry with a solid content of 40%; ball milling and sand grinding the slurry, so that the particle size D50 after the sand grinding is controlled to be 100-200 nm, fully mixing the iron source, lithium source, phosphorus source, carbon source, and other raw materials evenly, and then centrifugally spray-drying the mixture to obtain a pale yellow precursor powder; placing the precursor in a graphite saggar for sintering at a high temperature of 650-700 °C under the protection of nitrogen atmosphere for 18-20 hours, naturally cooling, then pulverizing the sintered material by a jet mill, and then removing iron to obtain a high-rate lithium iron phosphate positive electrode material;
wherein, the iron source and phosphorus source are anhydrous iron phosphate having a honeycomb structure and a BET of 9-11m²/g;
the lithium source is battery-grade lithium carbonate with a main content of ≥99.7%;
the carbon source is selected from the group consisting of glucose, PEG2000, PEG6000, white granulated sugar, citric acid and a combination thereof;
the metal ion doping agent is selected from the group consisting of nano-titanium dioxide, zirconium dioxide and a combination thereof.

In the present disclosure, a lithium iron phosphate precursor with spherical-like morphology is produced using a high-temperature solid-phase method, then the precursor is sintered to obtain a lithium iron phosphate positive electrode material with spherical-like morphology, wherein the primary particle thereof has a particle size of 100 nm. The produced material has a complete crystalline structure, no impurity peaks, good discharge capacity and good cycle capability.

### Example 1

First, 25 g of anhydrous iron phosphate, 6.3 g of lithium carbonate, 2.64 g of glucose, 0.32 g of PEG2000, and 0.25 g of titanium dioxide were weighed, and the above raw materials were dispersed in 5.3 g of deionized water. The resulting mixture was ball milled for 2 h, and then transferred to sand grinding, so that the particle size D50 after the sand grinding was controlled to be 100-200 nm. The iron source, lithium source, carbon source, metal ion doping agent and other raw materials were fully mixed evenly, and then the mixture was centrifugally spray-dried to obtain a pale yellow precursor powder. The precursor was placed in a graphite saggar, and sintered at a high temperature of 650-700 °C under the protection of nitrogen atmosphere for 18-20 hours, and the sintered material was naturally cooled. The sintered material was pulverized by a jet mill, and iron was removed from the pulverized material to obtain a high-rate lithium iron phosphate positive electrode material.

### Example 2

First, 25 g of anhydrous iron phosphate, 6.3 g of lithium carbonate, 3.8 g of sucrose, 0.78 g of PEG2000, and 0.25 g of titanium dioxide were weighed, and the above raw materials were dispersed in 5.3 g of deionized water. The resulting mixture was ball milled for 2 h, and then transferred to sand grinding, so that the particle size D50 after the sand grinding was controlled to be 100-200 nm. The iron source, lithium source, carbon source, metal ion doping agent and other raw materials were fully mixed evenly, and then the mixture was centrifugally spray-dried to obtain a pale yellow precursor powder. The precursor was placed in a graphite saggar, and sintered at a high temperature of 650-700 °C under the protection of nitrogen atmosphere for 18-20 hours, and the sintered material was naturally cooled. The sintered material was pulverized by a jet mill, and iron was removed from the pulverized material to obtain a high-rate lithium iron phosphate positive electrode material.

### Example 3

First, 25 g of anhydrous iron phosphate, 6.3 g of lithium carbonate, 5.68 g of citric acid, and 0.13 g of titanium dioxide were weighed, and the above raw materials were dispersed in 5.3 g of deionized water. The resulting mixture was ball milled for 2 h, and then transferred to sand grinding, so that the particle size D50 after the sand grinding was controlled to be 100-200 nm. The iron source, lithium source, carbon source, metal ion doping agent and other raw materials were fully mixed evenly, and then the mixture was centrifugally spray-dried to obtain a pale yellow precursor powder. The precursor was placed in a graphite saggar, and sintered at a high temperature of 650-700 °C under the protection of nitrogen atmosphere for 18-20 hours, and the sintered material was naturally cooled. The sintered material was pulverized by a jet mill, and iron was removed from the pulverized material to obtain a high-rate lithium iron phosphate positive electrode material.

### Example 4

First, 25 g of anhydrous iron phosphate, 6.3 g of lithium carbonate, 5.68 g of glucose, 0.32 g of PEG2000, and 0.31 g of zirconium dioxide were weighed, and the above raw materials were dispersed in 5.3 g of deionized water. The resulting mixture was ball milled for 2 h, and then transferred to sand grinding, so that the particle size D50 after the sand grinding was controlled to be 100-200 nm. The iron source, lithium source, carbon source, metal ion doping agent and other raw materials were fully mixed evenly, and then the mixture was centrifugally spray-dried to obtain a pale yellow precursor powder. The precursor was placed in a graphite saggar, and sintered at a high temperature of 650-700 °C under the protection of nitrogen atmosphere for 18-20 hours, and the sintered material was naturally cooled. The sintered material was pulverized by a jet mill, and iron was removed from the pulverized material to obtain a high-rate lithium iron phosphate positive electrode material.

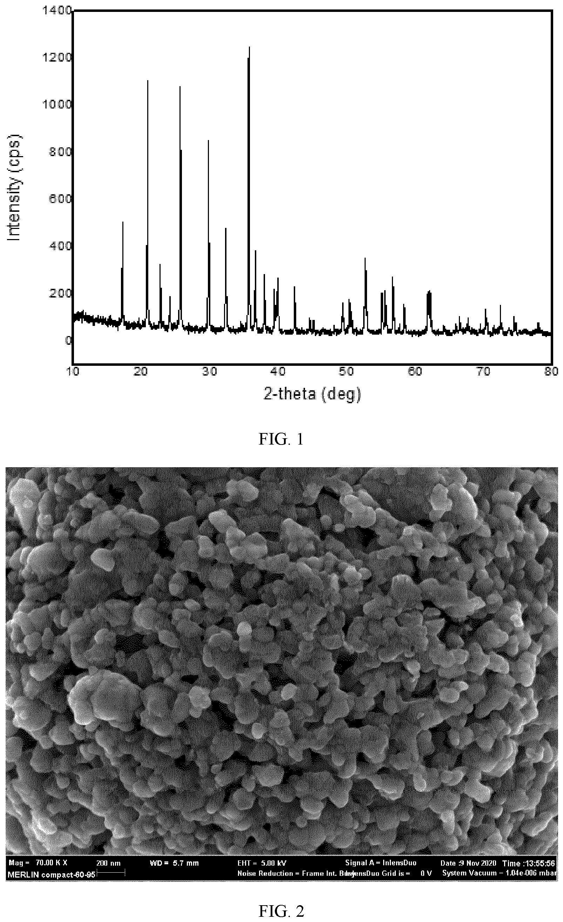

The lithium iron phosphate material prepared in Example 1 was characterized by a Japanese Rigaku X-ray powder diffractometer (XRD). The results are shown in FIG. 1. The XRD spectrum shows the characteristic peaks of lithium iron phosphate with no impurity peaks. The lithium iron phosphate material prepared in Example 1 was characterized by a Zeiss Sigma 500 field emission scanning electron microscope (SEM). The results are shown in FIG. 2, indicating that the prepared lithium iron phosphate material has morphology of a spherical-like particle, wherein the primary particle thereof has a particle size of 100 nm.

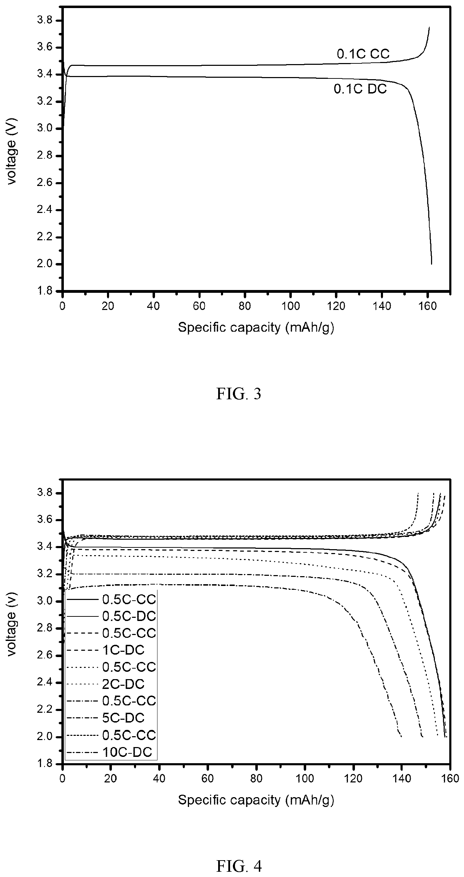

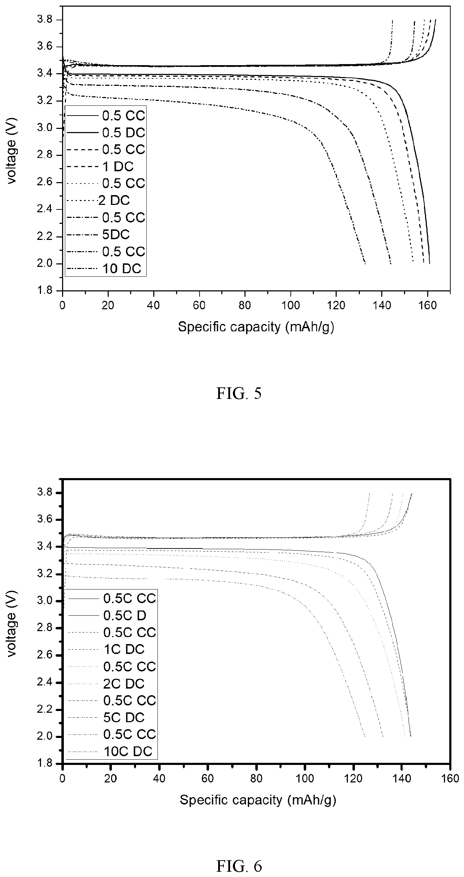

The lithium iron phosphate positive electrode material prepared in Example 1 was mixed with a conductive carbon powder and a PVDF binding agent in a mass ratio of 90:5:5, then the mixture was homogenized and coated on an aluminum foil. The coated foil was dried at 100 °C, and pressed by a pair-roll mill, and an electrode piece with a diameter of 14 mm was prepared by a sheet punching machine. The electrode piece was weighed, and the mass of the aluminum foil was deducted from the mass of the electrode piece to obtain the mass of the active material. The electrode piece was dried, and assembled to a CR2032 button half-cell in the order of negative electrode shell, lithium sheet, electrolyte, diaphragm, electrolyte, electrode piece, gasket, shrapnel, and positive electrode shell in a UNlab inert gas glove box of MBRAUN, Germany. The CR2032 button half-cell was tested for electrochemical performance within a voltage range of 2.0-3.9 V by Wuhan Land Electronics CT2001A battery test system. The test results are shown in FIG. 3 and FIG. 4. FIG. 3 shows that the lithium iron phosphate positive electrode material prepared in Example 1 had an initial discharge capacity of 161 mAh/g at a current of 0.1 C and room temperature. FIG. 4 shows that the lithium iron phosphate positive electrode material prepared in Example 1 had a 10 C discharge capacity of 140 mAh/g at a charging current of 0.5 C and room temperature. FIG. 5 shows that the lithium iron phosphate positive electrode material prepared in Example 2 had a 10 C discharge capacity of 135 mAh/g at a charging current of 0.5 C and room temperature. FIG. 6 shows that the lithium iron phosphate positive electrode material prepared in Example 3 had a 10 C discharge capacity of 124 mAh/g at a charging current of 0.5 C and room temperature. FIG. 7 shows that Example 1 had a capacity retention rate of above 95% after 17,878 operating mode cycles at 25 °C. FIG. 8 shows that Example 1 had a capacity retention rate of above 90% after 11,922 operating mode cycles at 45 °C, showing good rate capability and good cycle stability.

The above are only the preferred embodiments of the present disclosure. It should be noted that for those of ordinary skill in the art, several improvements and modifications can be made without departing from the principles of the present disclosure, which should also be regarded as the protection scope of the present disclosure.

## Claims

1. A method for producing a high-rate lithium iron phosphate positive electrode material, wherein the positive electrode material has a microscopic morphology of a spherical-like particle, and a primary particle thereof has a particle size of 100 nm;
the method for producing a lithium iron phosphate positive electrode material is a high-temperature solid-phase method, comprising specific steps of: A weighing an iron source and a lithium source according to a certain molar ratio, then weighing a certain mass of a carbon source and an ion doping agent, adding pure water to the above weighed materials to prepare a slurry with a certain solid content, and ball milling the slurry; B transferring the ball-milled slurry to a sand grinder for sand-grinding, so that the particle size after the sand grinding is controlled within a certain range; C spraying the slurry after the sand grinding to obtain a pale yellow precursor powder; D putting the precursor into a sintering furnace for sintering at a high temperature under the protection of nitrogen gas, and cooling to obtain a sintered material; E pulverizing and sieving the pulverized material, and removing iron to obtain the lithium iron phosphate.

2. The method for producing a lithium iron phosphate positive electrode material according to claim 1, wherein in the step A, the used iron source is anhydrous iron phosphate having a honeycomb structure and a BET of 9-11 m²/g.

3. The method for producing a lithium iron phosphate positive electrode material according to claim 1, wherein in the step A, the molar ratio of the iron source and the lithium source is 1: 1 to 1:1.05.

4. The method for producing a lithium iron phosphate positive electrode material according to claim 1, wherein in the step A, the carbon source is selected from the group consisting of glucose, PEG2000, PEG6000, white granulated sugar, citric acid and a combination thereof.

5. The method for producing a lithium iron phosphate positive electrode material according to claim 1, wherein in the step A, the metal ion doping agent is one of titanium dioxide and zirconium dioxide.

6. The method for producing a lithium iron phosphate positive electrode material according to claim 1, wherein in the step B, the particle size D50 of the slurry after sand grinding is controlled to be 100-200 nm.

7. The method for producing a lithium iron phosphate positive electrode material according to claim 1, wherein in the step C, the spraying is carried out with an air inlet temperature of 240-280 °C, and an air outlet temperature of 80-95 °C.

8. The method for producing a lithium iron phosphate positive electrode material according to claim 1, wherein in the step D, the precursor is sintered at a high temperature of 650-700 °C under the protection of nitrogen gas for 18-20 h.

9. The method for producing a lithium iron phosphate positive electrode material according to claim 1, wherein in the step E, the particle size D50 of the sintered material after pulverizing is controlled to be 0.4-1.5 µm.
